# EUROPEAN PATENT SPECIFICATION

(11) **EP 1 985 353 B1**
(45) Date of publication and mention of the grant of the patent: **14.11.2012**
(21) Application number: 08007397.6
(22) Date of filing: 15.04.2008
(51) Int. Cl.: B01D 53/56, B01D 53/94, B01J 23/42, B01J 23/44, B01J 35/00, B01J 35/04, F01N 3/28, B01D 53/92

(54) **Exhaust gas purification catalyst for automobile, exhaust gas purification catalyst system and purifying process of exhaust gas**
Abgasreinigungskatalysator für Automobile, Abgasreinigungskatalysatorsystem und Abgasreinigungsvorgang
Catalyseur de purification de gaz d'échappement pour automobile, système catalytique pour la purification de gaz d'échappement et processus de purification de gaz d'échappement

(30) Priority: 27.04.2007 JP 2007119025
(43) Date of publication of application: 29.10.2008
(73) Proprietor: N.E. Chemcat Corporation, Tokyo 105-6124 (JP)
(72) Inventor: Nagata, Makoto, Numazu-shi Shizuoka 4100314 (JP); Kanno, Yasuharu, Numazu-shi Shizuoka 4100314 (JP); Ando, Ryuji, Numazu-shi Shizuoka 4100314 (JP)
(74) Representative: Müller-Boré & Partner Patentanwälte

(56) References cited:
- EP-A- 1 864 713
- WO-A-95/32790
- WO-A-2006/056811
- MORLANG ET AL: "Bimetallic Pt/Pd diesel oxidation catalysts" APPLIED CATALYSIS B: ENVIRONMENTAL, ELSEVIER, vol. 60, no. 3-4, 3 October 2005 (2005-10-03), pages 191-199, XP005095694 ISSN: 0926-3373
- GRAHAM G W ET AL: "Effect of alloy composition on dispersion stability and catalytic activity for NO oxidation over alumina-supported Pt-Pd catalysts" CATALYSIS LETTERS, KLUWER ACADEMIC PUBLISHERS-PLENUM PUBLISHERS, NE, vol. 116, no. 1-2, 27 April 2007 (2007-04-27), pages 1-8, XP019498947 ISSN: 1572-879X

## Description

### Technical Field

The present invention relates to an exhaust gas purification catalyst for automobile, an exhaust gas purification catalyst system and a purifying process of exhaust gas. In more detail, the present invention relates to an exhaust gas purification catalyst for automobile which is capable of raising temperature of exhaust gas exhausted from combustion engines such as diesel engine cars and converting NO in the exhaust gas to NO₂, in addition, an exhaust gas purification catalyst system to purify soot, soluble organic component and NOx component exhausted from diesel engines, and a purifying process of exhaust gas.

### Background Art

From exhaust gas exhausted from combustion engines such as lean-burn type gasoline engine, diesel engine, by lean combustion of fuel, various harmful substances derived from fuel and combustion air are exhausted depending on structures and types of the combustion engines. These harmful substances include components, which are regulated by the Clean Air Act, such as hydrocarbons (HC), soluble organic fraction (also referred to as SOF), carbon monoxide (CO), nitrogen oxides (NOx), soot.

Therefore, in the combustion engines in which lean combustion takes place, generation amounts of harmful substances are controlled by carrying out various controlling means depending on kind and feed rate of fuel. However, it is not that all types of combustion engines can be always controlled in an ideal state, and sometimes large amounts of harmful substances such as soot, SOF, nitrogen oxides are generated depending on use conditions. In particular, in a case of engines for automobile, it is difficult to avoid generation of harmful substances only by controlling combustion state, because operation conditions vary every hour. In addition, in the case of diesel engines for automobile, generation amounts of harmful substances are great due to structures thereof. In recent years, with increasing awareness about environmental issues, emission of these harmful substances has been considered as a serious social problem. In order to control emission of these harmful substances, various means had so far been taken.

As one of such means, in order to reduce harmful particle component such as soot, SOF, filtering out of the harmful particle component has been studied by placing a filter in a flow path of exhaust gas. The harmful particle component filtered out here deposits on the filter and leads to clogging then breakdown of the filter, if the component is allowed as it is. Therefore, in order to remove the harmful particle component which is filtered out and deposits, a process has been proposed in which the deposited harmful particle component is removed by combusting them utilizing heat, oxygen and NO₂ in exhaust gas.

In order to raise temperature of exhaust gas and increase NO₂ concentration in exhaust gas by combusting harmful particle component deposited on a filter, such a method has been studied that an oxidation catalyst is placed in a preceding stage of a filter to generate heat by combusting HC component in the exhaust gas, and further increase NO₂ concentration in exhaust gas by oxidizing NO in the exhaust gas to NO₂ (see: e. g. Patent Literature 1). In a certain case, fuel is used as HC component to raise temperature of exhaust gas. Specifically, extra fuel is sometimes supplied to engine to raise temperature of exhaust gas.
In another case, fuel is sprayed onto the filter to combust deposited harmful particle component using the fuel.

In addition, as for NOₓ component contained in exhaust gas, such a method has been studied that NOₓ is reacted with reducing component in exhaust gas and purified by placing a catalyst to reduce and purify NOₓ in a flow path of exhaust gas.
In this method, a process in which ammonia (NH₃) or urea is used as a reducing agent is known as Selective Catalytic Reduction Process (hereinafter, also referred to as SCR), and the catalyst for such process is referred to as SCR catalyst.
In SCR, a reduction reaction proceeds to purify NOₓ component, by placing a catalyst containing an NH₃-adsorbing component, then supplying NH₃ component thereto, followed by passing exhaust gas containing NOₓ component.
As such an NH₃ component for SCR, an aqueous NH₃ solution or an aqueous urea solution is used, and as a catalyst containing NH₃-adsorbing component, a catalyst containing vanadia, titania or zeolite is used.

In SCR in which an NH₃ component is used as a reducing agent, nitrogen oxides are reduced finally to N₂ mainly by the following reaction equations (1) to (3) shown below.

4NO + 4NH₃ + O₂ → 4N₂ + 6H₂O (1)

2NO₂ + 4NH₃ + O₂ → 3N₂ + 6H₂O (2)

NO + NO₂ + 2NH₃ → 2N₂ + 3H₂O (3)

In such denitration catalyst system, gasified NH₃ is often used as a reducing component, but NH₃ itself has harmful effects such as an irritating odor. Therefore, such a system has been proposed that an aqueous urea solution as a NH₃ component is added from the upstream of denitration catalyst to generate NH₃ by thermal decomposition or hydrolysis and exert denitration performance as a reducing agent according to the reactions of the above equations.
Reaction equations to obtain NH₃ by this decomposition of urea are as follows.

NH₂-CO-NH₂ → NH₃ + HCNO (thermal decomposition of urea)

HCNO + H₂O → NH₃ + CO₂ (hydrolysis of isocyanic acid)

NH₂-CO-NH₂ + H₂O → 2NH₃ + CO₂ (hydrolysis of urea)

In addition, in the purification of NOₓ, it is known that the equation (3) among the above equations (1) to (3) is most superior in reactivity (see: e.g. Non-Patent Literature 1). Therefore, such a method has been studied that an oxidation catalyst is placed in a preceding stage of SCR to convert NO to NO₂ and improve purification efficiency for NOₓ.

In addition, as for NOₓ component contained in exhaust gas, besides SCR, such a method has been studied that NOₓ is reduced and purified by adsorbing NOₓ on a catalyst containing NOₓ-adsorbing component then supplying a reducing component to the catalyst, and this catalyst is called as NOₓ storage catalyst or Lean NOₓ Trap (LNT) catalyst (for example, Patent Literature 2) .
In this LNT, HC contained in exhaust gas combusted at a rich air fuel ratio or a fuel sprayed in an exhaust pipe is used as a reducing agent. In addition, LNT catalyst is essential to have a NOₓ-adsorbing component, and as such a component, alkali metal or alkaline earth metal such as barium carbonate and rare earth component such as ceria have been used (Patent Literature 2). In addition, in this LNT, NO₂ is believed to have higher reactivity than NO, in the same manner as in SCR.

However, the most of NOₓ component exhausted from lean burn engines is nitrogen monoxide (NO). Therefore, in order to purify efficiently harmful particle component and NOₓ in exhaust gas, increase in concentration of NO₂ component in exhaust gas has been studied, and as a means thereof, there is a process that a NO-oxidizing means is placed in a flow path of exhaust gas (for example, Patent Literature 3).
Another method has been proposed in which harmful particle component and NOₓ are simultaneously purified with a single catalyst system utilizing such NO-oxidizing means. One of the method is such a method that an oxidation catalyst, a filter, an ammonia component supplying means, and a SCR catalyst are placed in a flow path of exhaust gas (for example, see Patent Literature 4). According to this process, harmful components can be efficiently purified by spraying ammonia component to NOₓ containing NO₂ component increased by the oxidation catalyst in the subsequent stage of the filter, then supplying to a SCR catalyst,

In addition, the method has been proposed in which soot and NOₓ are simultaneously purified in a catalyst system using LNT. One of the method is such a method that an oxidation catalyst is placed in a flow path of exhaust gas, and a filter is placed in the subsequent stage thereto, and a LNT catalyst is placed in the further subsequent stage thereto (for example, see Patent Literature 5). According to this process, soot deposited on the filter can be efficiently removed by NO₂ and heat generated by the oxidation catalyst, and NOₓ produced by a combustion reaction of soot is removed by the LNT catalyst placed in the downstream of the filter.

In this way, in order to oxidize NO to NO₂ and raise the temperature of exhaust gas, an oxidation catalyst using noble metal component such as platinum (Pt) and palladium (Pd) as a catalytically active species is often used. Here, temperature of exhaust gas is raised by oxidation or combustion occurring by contact of HC in exhaust gas or a fuel supplied into exhaust gas with the oxidation catalyst. Among the catalytically active species, Pt shows a high oxidative activity against various exhaust gas components such as HC, CO, NO, SOF and soot. However, Pt can be poisoned by a long chain HC to lower its catalytic activity. This poisoning by a long chain HC occurs in such a case when fossil fuel such as light oil, gasoline is supplied into exhaust gas as a HC component, or particularly occurs dominantly in such a case when heavy oil is used as a fuel.

Usually, most of reactions of exhaust gas with reducing agent take place on the surface of a catalytically active species. That is, a large surface area of catalytically active species is an essential condition of high catalytic activity. That is, in order to derive an activity of catalytically active species such as noble metal component to the maximum extent, it is necessary to highly disperse in a state of catalytically active species having a small particle size, namely, in a state of particle, and maintain the state thereof for an extended period of time for industrial purpose.
However, some noble metals such as Pt have a tendency that particle size tends to grow up by sintering at an elevated temperature (for example, see Patent Literature 6). Therefore, use of Pt as a noble metal component leads to taking a risk that catalytic activity may decrease due to growth of particle size.
Thus, although various methods have been studied about purification of harmful particle component and NOₓ in exhaust gas, these conventional exhaust gas purification technologies were not sufficient against the regulations for harmful substances which are becoming increasingly severe in recent years.
[Patent Literature 1]: JP-B-. 3012249; (EP 0 341832 A1);
[Patent Literature 2]: JP-A-11-319564 (Claim 1 and [0005]);
[Patent Literature 3]: JP-A-5-38420 (Claim 1, [0012] and [0013]);
[Patent Literature 4]: JP-A-2002-502927 (WO 9939809 A1);
[Patent Literature 5]: JP-A-09-53442 (EP-0758713 A1);
[Patent Literature 6]: JP-A-08-38897 ([0011]) (EP 0 695 580 A1);
[Non-Patent Literature 1] : Catalysis Today 114 (2006), 3-12 (page 4, left column).

### Disclosure of Invention

### Problem to be Solved by the Invention

Considering the above conventional problems, it is an obj ect of the present invention to provide an exhaust gas purification catalyst for automobile which is capable of raising temperature of exhaust gas exhausted from combustion engines of diesel engine cars and converting NO in exhaust gas to NO₂, and an exhaust gas purification catalyst system to purify soot, soluble organic component and NOₓ component exhausted from diesel engines, and a purifying process of exhaust gas.

### Means for Solving the Problem

The present inventors have intensively studied a way to solve the above problem, as a result, have found that a catalyst composition, in which a platinum - palladium alloy component and a catalyst component containing platinum are supported separately on a heat-resistant inorganic oxide, was prepared and coated on a monolithic structure type catalyst, in order to improve purification performance to purify harmful particle component composed of soot, SOF and the like and harmful substances such as NOₓ exhausted from diesel engines, etc. with a simple catalyst system, then the resultant exhaust gas purification catalyst has an enhanced ability to oxidize NO in NOₓ to NO₂ and an enhanced heat generation ability produced by supply of HC component, and also exerts a superior effect in durability when HC component is used as a fuel, and accomplished the present invention.

Namely, according to the first aspect of the present invention, the present invention provides an exhaust gas purification catalyst composition for automobile, characterized in that the exhaust gas purification catalyst composition comprises a catalyst composition in which a noble metal catalyst component (A) is supported on a heat-resistant inorganic oxide (B), and oxidizes NO in automobile exhaust gas; and the noble metal catalyst component (A) comprises platinum (Pt) existing in a state of elemental substance in the catalyst composition and platinum - palladium (Pt-Pd) existing in a state of alloy in the catalyst composition, wherein

platinum (Pt) andplatinum-palladium (Pt-Pd) are present in a weight ratio of 1:20 to 20:1.
In addition, according to the second aspect of the present invention, the present invention provides an exhaust gas purification catalyst composition for automobile, characterized in that, in the first or the second aspect, an average particle size of the noble metal catalyst component (A) is 2 to 50 nm.
In addition, according to the third aspect of the present invention, the present invention provides an exhaust gas purification catalyst composition for automobile, characterized in that, in the third aspect, a distance between adjacent particles of the noble metal catalyst component (A) is 5 to 300 nm.
In addition, according to the fourth aspect of the present invention, the present invention provides an exhaust gas purification catalyst composition for automobile, characterized in that, in any one of the first to the third aspects, in the noble metal catalyst component (A), platinum (Pt) and platinum - palladium (Pt-Pd) are supported separately on a heat-resistant inorganic oxide (B) in advance.
Further, according to the fifth aspect of the present invention, the present invention provides an exhaust gas purification catalyst composition for automobile, characterized in that, in the first aspect, the heat-resistant inorganic oxide (B) is γ-Al₂O₃ or lanthanum-added γ-Al₂O₃.

In addition, according to the sixth aspect of the present invention, the present invention provides an exhaust gas purification catalyst for automobile, characterized in that the catalyst composition according to any one of the first to the fifth aspects is coated on a monolithic structure type carrier having a honeycomb shape, and total coating amount of said catalyst composition per unit volume of the monolithic structure type carrier is 30 to 400 g/L.
Further, according to the seventh aspect of the present invention, the present invention provides an exhaust gas purification catalyst for automobile, characterized in that, in the seventh aspect, amounts of platinum (Pt) existing in a state of elemental substance in the catalyst composition and platinum - palladium (Pt-Pd) existing in a state of alloy in the catalyst composition per unit volume of the monolithic structure type carrier are each 0.1 to 10 g/L.

At the same time, according to the eighth aspect of the present invention, the present invention provides an exhaust gas purification catalyst system, wherein a light oil spraying means and the exhaust gas purification catalyst (DOC) for automobile according to the sixth or the seventh aspect are placed in a flow path of automobile exhaust gas exhausted from diesel engines, and a filter (DPF) to collect harmful particle component is placed in the subsequent stage thereto.
In addition, according to the ninth aspect of the present invention, the present invention provides an exhaust gas purification catalyst system, wherein a light oil spraying means and the exhaust gas purification catalyst (DOC) for automobile according to the sixth or the seventh aspect are placed in a flow path of automobile exhaust gas exhausted from diesel engines, and a filter (DPF) to collect harmful particle component and a catalyst (LNT) to collect nitrogen oxides and reduce and purify with hydrocarbon are placed sequentially in the subsequent stage thereto.
Furthermore, according to the tenth aspect of the present invention, the present invention provides an exhaust gas purification catalyst system, wherein a light oil spraying means and the exhaust gas purification catalyst (DOC) for automobile according to the sixth or the seventh aspect are placed in a flow path of automobile exhaust gas exhausted from diesel engines, and a filter (DPF) to collect harmful particle component, an ammonia component supplying means, and a selective catalytic reduction catalyst (SCR) to reduce and purify nitrogen oxides using the ammonia component as a reducing agent are placed in the subsequent stage thereto.

At the same time, according to the eleventh aspect of the present invention, the present invention provides a purifying process of exhaust gas, characterized by using the exhaust gas purification catalyst system according to the eight aspect; supplying a light oil component in the preceding stage of the exhaust gas purification catalyst (DOC) for automobile in a flow path of exhaust gas exhausted from diesel engines and contacting with said catalyst to heat up the exhaust gas as well as converting NO in the exhaust gas to NO₂ by oxidation; and collecting harmful particle component with a filter (DPF) as well as combusting the collected harmful particle component utilizing said heated exhaust gas in the subsequent stage thereto.

In addition, according to the twelveth aspect of the present invention, the present invention provides a purifying process of exhaust gas, characterized by using the exhaust gas purification catalyst system according to the ninth aspect; supplying a light oil component in the preceding stage of the exhaust gas purification catalyst (DOC) for automobile in a flow path of exhaust gas exhausted from diesel engines and contacting with said catalyst to heat up the exhaust gas as well as converting NO in the exhaust gas to NO₂ by oxidation; collecting harmful particle component with a filter (DPF) as well as combusting the collected harmful particle component utilizing said heated exhaust gas in the subsequent stage thereto; subsequently contacting remaining hydrocarbon and NO₂ with a catalyst (LNT) to reduce and purify nitrogen oxides in the exhaust gas.
In addition, according to the thirteenth aspect of the present invention, the present invention provides a purifying process of exhaust gas, characterized by using the exhaust gas purification catalyst system according to the tenth aspect; supplying a light oil component in the preceding stage of the exhaust gas purification catalyst (DOC) for automobile in a flow path of exhaust gas exhausted from diesel engines and contacting with said catalyst to heat up the exhaust gas as well as converting NO in the exhaust gas to NO₂ by oxidation; collecting harmful particle component with a filter (DPF) as well as combusting the collected harmful particle component utilizing said heated exhaust gas in the subsequent stage thereto; subsequently spraying ammonia component from ammonia component supplying means, then contacting nitrogen oxides in the exhaust gas with a selective catalytic reduction catalyst (SCR) to reduce and purify with ammonia.
Furthermore, according to the fourteenth aspect of the present invention, the present invention provides a purifying process of exhaust gas, characterized by using the exhaust gas purification catalyst system according to the tenth aspect; supplying a light oil component in the preceding stage of the exhaust gas purification catalyst (DOC) for automobile in a flow path of exhaust gas exhausted from diesel engines and contacting with said catalyst to heat up the exhaust gas as well as converting NO in the exhaust gas to NO₂ by oxidation; spraying ammonia component fromammonia component supplyingmeans, then contacting nitrogen oxides in the exhaust gas with a selective catalytic reduction catalyst (SCR) to reduce and purify with ammonia; collecting harmful particle component with a filter (DPF) as well as combusting the collected harmful particle component utilizing said heated exhaust gas in the subsequent stage thereto.

### Effect of the Invention

The exhaust gas purification catalyst of the present invention is superior in an ability to generate NO₂ by oxidizing NO, and exerts a stable high heat generation performance derived from oxidation of HC component in exhaust gas even when a long chain HC is contained in HC component. In addition, a catalyst system which exerts a superior NOₓ purification performance can be obtained by combining with SCR and LNT using NH₃ as a reducing agent. In addition, in a catalyst system in which a filter is placed in the subsequent stage of the present catalyst, an ability of the filter can be maintained for an extended period of time because combustion of the harmful particle component composed of soot and SOF deposited on the filter is facilitated and the filter is regenerated. In addition, by the heat generation ability of the present catalyst, combustion performance for harmful particle component is further enhanced.

### Brief Description of Drawings

### [Fig. 1]

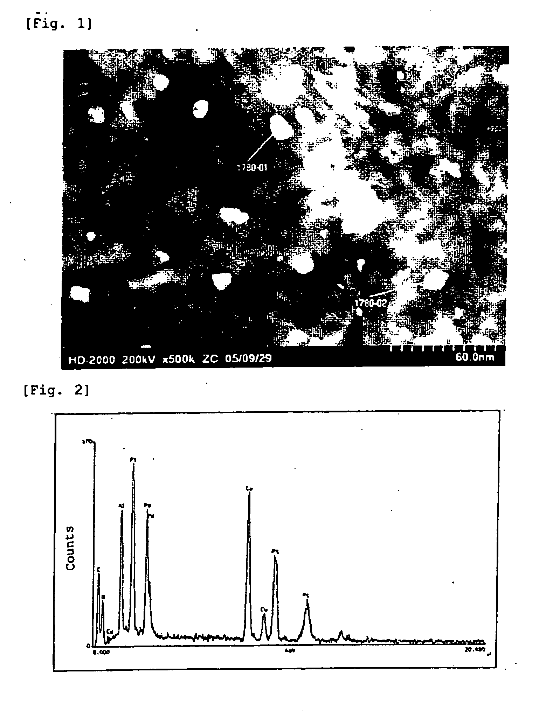

Fig. 1 shows a micrograph by TEM illustrating the catalyst composition of the present invention.

### [Fig. 2]

Fig. 2 shows an analysis result (chart) by EDX of "1780-01" shown in Fig. 1.

### [Fig. 3]

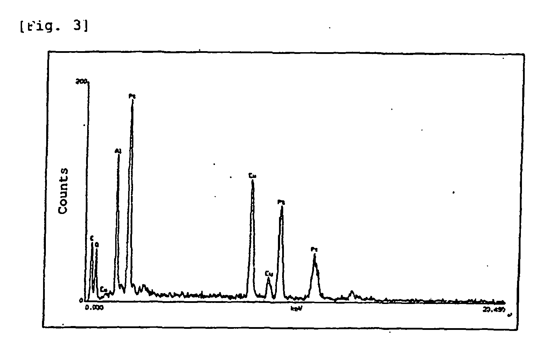

Fig. 3 shows an analysis result (chart) by EDX of "1780-02" shown in Fig. 1.

### [Fig. 4]

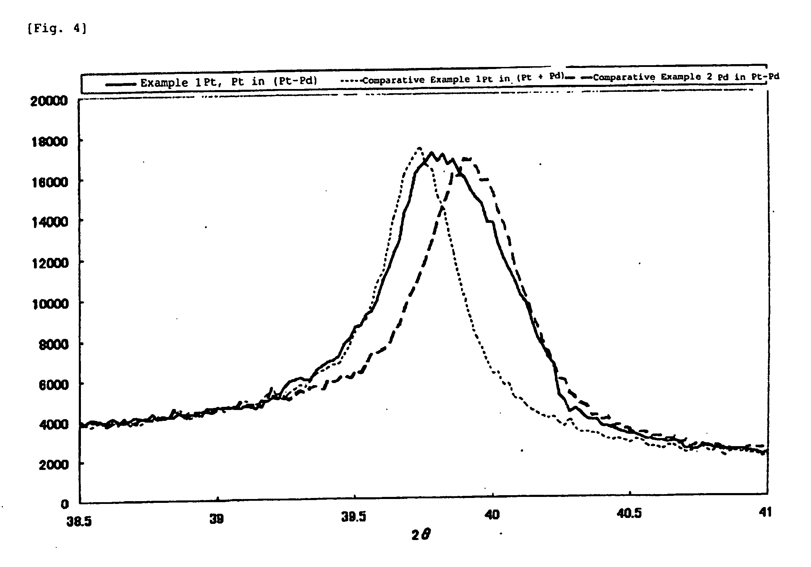

Fig. 4 shows peaks of Pt taken out from analysis results (charts) by XRD for the catalyst compositions of Example 1, Comparative Example 1 and Comparative Example 2.

### [Fig. 5]

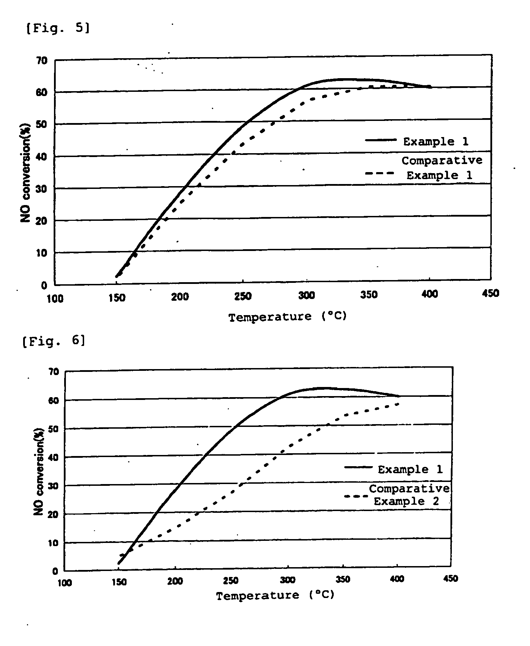

Fig. 5 shows graphs obtained by measuring conversion efficiencies from NO to NO₂ using monolithic structure type catalysts obtained in the present invention (Example 1) and Comparative Example 1.

### [Fig. 6]

Fig. 6 shows graphs obtained by measuring efficiencies of the conversion from NO to NO₂ using monolithic structure type catalysts obtained by the present invention (Example 1) and Comparative Example 2.

### [Fig. 7]

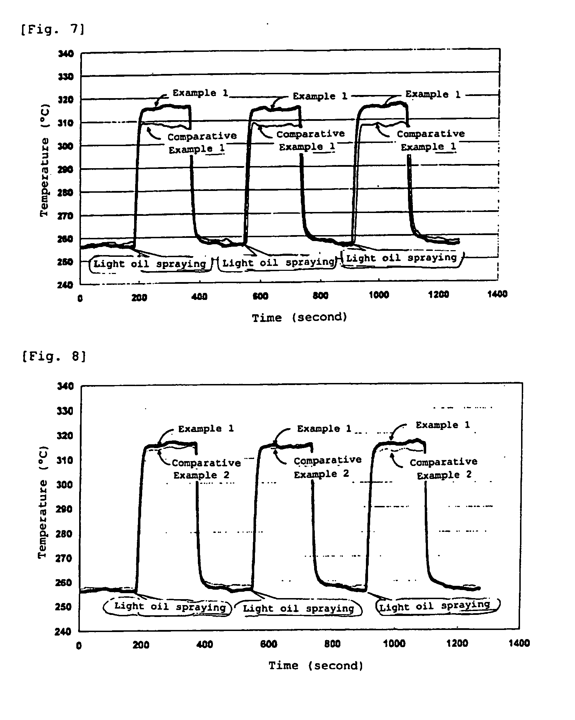

Fig. 7 shows graphs obtained by evaluating temperature raising performances of exhaust gas using monolithic structure type catalysts obtained by the present invention (Example 1) and Comparative Example 1.

### [Fig. 8]

Fig. 8 shows graphs obtained by evaluating temperature raising performances for exhaust gas using monolithic structure type catalysts obtained by the present invention (Example 1) and Comparative Example 2.

### Best Mode for Carrying Out the Invention

Hereinafter, the exhaust gas purification catalyst for automobile of the present invention, the catalyst system using the same, and the purifying process of exhaust gas using these catalyst systems will be explained in detail using the drawings. Explanation is made taking mainly diesel engines for automobile as an example, however, the present invention is not limited to applications to diesel cars, and exerts a high heat generation performance even in other applications such as gasoline engines, and can also be used in purification technology for NOₓ generated by lean combustion and in removal by combustion of harmful particle component. In addition, the catalyst of the present invention exerts an effect to inhibit the growth of grains of the noble metal component, because the catalyst is sintered due to exposure to a high temperature.

### 1. Exhaust gas purification catalyst for automobile

The exhaust gas purification catalyst for automobile of the present invention is characterized in that the exhaust gas purification catalyst composition comprises a catalyst composition in which a noble metal component (A) is supported on a heat-resistant inorganic oxide (B), and oxidizes NO in automobile exhaust gas; and the noble metal catalyst component (A) comprises platinum (Pt) existing in a state of elemental substance in the catalyst composition and platinum - palladium (Pt-Pd) existing in a state of alloy in the catalyst composition. It should be noted that the exhaust gas purification catalyst for automobile of the present invention is used as a composition of catalyst component or used by coating the same on a monolithic structure type carrier, hereinafter, the former may also be referred to as "the catalyst composition of the present invention" and the latter may also be referred to as "the catalyst of the present invention".

The exhaust gas purification catalyst for automobile of the present invention comprises at least a metal catalyst component such as noble metal component and a heat-resistant inorganic oxide, and the noble metal component comprises platinum (Pt) existing in a state of elemental substance in the catalyst composition, platinum - palladium (Pt-Pd) existing in a state of alloy in the catalyst composition. And the catalyst composition of the present invention is preferably used in a coated state on a structure type carrier.
Here, although the heat-resistant inorganic oxide can be used in combination with a plurality of materials, at least a part of them functions as a base material of noble metal component. Since activity of the noble metal component largely depends on a size of its surface area, the component is desirably present in a stably dispersed particle state and is supported on the heat-resistant inorganic oxide, so that the highly dispersed state can be stably maintained even at a high temperature.

In the present invention, the metal catalyst component is not limited only to platinum (Pt) and palladium (Pd), and transition metals, rare earth metals, other noble metals, and the like may also be used secondarily, so long as they have an activity for exhaust gas purification.
As the metal catalyst component to be used secondarily, specifically one or more kinds can be selected from transition metals such as iron, nickel, cobalt, zirconium, copper; rare earth metals such as cerium, lanthanum, praseodymium, neodymium; and noble metals such as gold, silver, rhodium. Particularly preferable metal catalyst component is platinum and palladium as essential materials as well as rhodium. Raw materials of the metal catalyst component are usually used in a form such as nitrate, sulfate, carbonate, acetate.

### (A) Noble metal catalyst component

As described above, the catalyst of the present invention contains Pt, which is a noble metal component, as an essential component. Pt is a noble metal exerting a high oxidizing activity for various types of hydrocarbons (HC) . In particular, when HC has a short chain length, the HC can be subjected to an oxidative decomposition with a high efficiency. However, in a catalyst in which Pt is contained in a state of elemental substance, there is a risk that the catalyst is poisoned by the HC if the catalyst is in contact with the long chain HC for a long period of time. Furthermore, Pt also has a problem that it loses activity when exposed to a high temperature, because metal grains thereof grow up due to sintering.

Therefore, in the catalyst of the present invention, a catalyst composition containing not only Pt but also Pd together is used. Although oxidizing ability of Pd is inferior compared with that of Pt for HC having a short chain length, but Pd is superior in oxidizing ability and cracking ability for a long chain HC. Therefore, even when a significant amount of long chain HC is supplied by exhaust gas using fuel spray or heavy fuel oil, the long chain HC can be cracked and a higher oxidizing activity can be expected compared with the case when Pt is contained in a state of elemental substance. However, when Pt and Pd exist respectively in a state of elemental substance, the problem, which Pt loses activity when exposed to a high temperature because metal grains grow up due to sintering, remains still unsolved.

Therefore, in the present invention, Pt and Pd are alloyed to obtain a catalytically active species having characteristics of Pd and a high oxidizing performance of Pt together. Namely, by preparing the catalyst composition in which Pt and Pd exist in a state of Pt-Pd and at the same time Pt exists in a state of elemental substance, even when a significant amount of long chain HC is supplied to the catalyst of the present invention by fuel spray, etc., the long chain HC can be cracked by Pt-Pd, and a superior HC purification function can be exerted by a high oxidizing activity of Pt contained in a state of elemental substance. Since Pt could lose a little its activity by alloying with Pd, Pt of an amount to compensate it is contained in a state of elemental substance.

Here, in the catalyst of the present invention, due to presence of Pt and Pd in a state of Pt-Pd, heat generation performance of the catalyst can be promoted by decomposition ability for long chain HC by Pt-Pd, therefore, temperature of the catalyst required to decompose harmful component other than HC contained in exhaust gas can be raised efficiently. Such increase in catalyst temperature accelerates to oxidize and remove the HC poisoned the Pt surface by the activity possessed by Pt itself, and effectively works to maintain the activity of Pt contained in a state of elemental substance.

In addition, noble metal catalyst exerts a superior oxidizing performance for NO, and usually Pd tends to be inferior in oxidizing performance for NO compared with Pt. However, as described above, Pt could be poisoned by a long chain HC contained in fuel, etc. , and poisoned Pt also lowers oxidizing performance for NO.
However, in the catalyst of the present invention, since Pt is also used as Pt-Pd, poisoning by long chain HC is inhibited, and the superior oxidizing performance for NO derived from Pt can be continuously exerted. Here, although the alloying of Pt and Pd seems to lead to decrease in oxidizing performance for NO, since Pt in the catalyst composition of the present invention is less poisoned by the HC as described above, and maintains to exert a high oxidizing activity for NO, the catalyst of the present invention can maintain a superior oxidizing performance for NO.

Content of the noble metal component varies depending on kind of transition metal, rare earth metal, and other noble metal, type of inorganic base material or carrier, etc., but amount per unit volume of inorganic base material or carrier is 0.01 to 10 g/L, in particular, the weight of platinum (Pt) existing in a state of elemental substance in the catalyst composition and platinum and palladium (Pt-Pd) existing in a state of alloy in the catalyst composition per unit volume of monolithic structure type carrier as inorganic base material are preferably each 0.1 to 10 g/L. Amount of noble metal component over 10 g/L results in rise of production cost for the catalyst, and amount less than 0.01 g/L deteriorates purification performance for exhaust gas.
In the noble metal catalyst component (A), platinum (Pt) and platinum - palladium (Pt-Pd) are preferably supported on a heat-resistant inorganic oxide (B) separately in advance. In addition, weight ratio of platinum (Pt) and platinum - palladium (Pt-Pd) is 1:20 to 20:1, and preferably 1:10 to 10:1.

In addition, average particle size of the noble metal catalyst component (A) is desirably 2 to 50 nm. The noble metal particle having a size of 2 nm or more can stably exist hardly growing up to coarse grains even when heated up during use, so long as its composition is that of the catalyst composition of the present invention, thereby exerts a stable performance as a catalyst. In addition, a value of surface area required for catalytic reaction of the noble metal can be obtained so long as its particle size does not exceed 50 nm at a maximum even the particle size becomes large.

Further, distance between adjacent particles of the noble metal catalyst component (A) is desirably 5 to 300 nm. Positions of adjacent particles are desirably not too far from each other, and the distance exceeding 300 nm could impair stable exertion of catalytic reaction of the noble metal, for example, the inhibition function by platinum and platinum - palladium (Pt-Pd) for HC poisoning does not work for platinum (Pt) in a state of elemental substance. When the distance is 5 nm or more, the noble metal particle can stably exist hardly growing up to coarse grains even if heated up during use. So long as the distance between noble metal particles is not closer than 5 nm, sintering of noble metal particles is inhibited without growing up to coarse grains, surface area value of the noble metal particle is maintained high, and a high reactivity can be obtained. As for the distance between adjacent noble metal particles, 50% or more of the particles have a distance of 5 to 50 nm, in particular, 70% or more of the particles have a distance of preferably 5 to 300 nm, and more preferably 10 to 200 nm. If particles have proper distances each other, contact of reactants as well as adsorption of reactants on the surface of noble metal can be promoted and reactivity is improved.

### (B) Heat-resistant inorganic oxide

In the present invention, the heat-resistant inorganic oxide is not particularly limited, and known catalyst materials, which have been used in the field of the catalyst for exhaust gas purification, can be used. Among the catalyst materials, porous inorganic oxides are preferable. Porous inorganic oxide can stably and highly disperse noble metal component due to its large specific surface area value, and the catalyst composition, in which noble metal component is supported thereon, is also superior in diffusion of exhaust gas.

Such porous inorganic oxide can be selected as appropriate from the known inorganic oxides described above, and γ-Al₂O₃ or lanthanum-added γ-Al₂O₃ is preferable. Since lanthanum-added γ-Al₂O₃ is superior in heat resistance, when noble metal component such as Pt is supported thereon, the γ-alumina can maintain a high catalytic activity even at a high temperature (see: JP-A-2004-290827). Specific surface area value (based on BET method, hereinafter same as above) of such γ-Al₂O₃ or lanthanum-added γ-Al₂O₃ is preferably 80 to 250 m²/g, and more preferably 200 to 250 m²/g. A specific surface area value of γ-alumina of 250 m²/g or less can stabilize the noble metal component in a highly dispersed state, and the value of 80 m²/g or more gives a catalyst superior in heat resistance.

To the catalyst composition of the present invention, in addition to the aforementioned raw materials, alkali metals, alkaline earth metals, and the like can be added as appropriate in order to improve catalyst performance. In addition, an exhaust gas purification catalyst for automobile having a more advanced function can also be obtained by combining as appropriate with an adsorbent such as zeolite, oxygen storage component (hereinafter, also referred to as OSC component) such as ceria and ceria - zirconia composite oxide.
Amount of the OSC component varies depending on types thereof, kind of carrier and the like, but in the case of ceria - zirconia composite oxide, the amount per volume of carrier is 0.01 to 100 g/L, in particular, preferably 0.1 to 30 g/L. By using in combination with the OSC component, oxidizing action of HC, SOF, etc. is facilitated by oxygen released from the OSC component, the catalyst composition can be used as a superior oxidation catalyst.

The catalyst composition of the present invention is thermally stable, for example, when a noble metal is used as a metal catalyst component, even under such condition that the composition is exposed to a high temperature over 1,000°C at which most noble metals start to have sintering (grain growth) for a long period of time, generation of coarse grains due to sintering or aggregation does not significantly occur. That is, although Pt and Pd have melting points exceeding 1,500°C, in a state where only Pt is finely dispersed on the surface of carrier like a conventional exhaust gas purification catalyst, sintering occurs under a usual exhaust gas atmosphere, thereby catalytic activity is lowered due to decreased surface area. On the contrary, the catalyst composition of the present invention can maintain a nano-order of size and have a superior durability even under such a severe condition.
Since the catalyst of the present invention is superior in cracking performance for long chain HC, the catalyst can be used as an oxidation catalyst for combustion engines in which heavy oil containing HC having a longer chain length than that of light oil is used as a fuel. Such examples using heavy oil include use in boilers and ships.

### 2. Production method of exhaust gas purification catalyst for automobile

Production method of exhaust gas purification catalyst for automobile of the present invention is not particularly limited, so long as a noble metal catalyst component (A) can be supported on a heat-resistant inorganic oxide (B) in such a manner that the noble metal catalyst component (A) comprises platinum (Pt) existing in a state of elemental substance in the catalyst composition and platinum - palladium (Pt-Pd) existing in a state of alloy in the catalyst composition.

In the production of the catalyst of the present invention, means for supporting a noble metal catalyst component (A) on a heat-resistant inorganic oxide (B) can be carried out by known methods such as impregnating method, ion exchange method, kneading method. One example thereof includes the followings.
Firstly, as necessary raw materials of noble metal component, compounds such as nitrates, sulfates, carbonates, acetates of platinum, palladium or rhodium are used. Specifically, platinic (IV) chloride, diammine platinum (II) nitrite, hydroxyplatinic acid amine solution, platinic chloride, dinitrodiammine palladium, palladium nitrate, palladium chloride, rhodium (III) chloride and rhodium (III) nitrate are provided. Besides these compounds, silver and silver salts may be used. These compounds are dissolved in water or an organic solvent to prepare a solution of raw material of noble metal component. Hereinafter, water or water added with a water-miscible organic solvent is referred to as "aqueous medium".

Next, this solution of raw material of noble metal component is mixed with a heat-resistant inorganic oxide together with an aqueous medium. In this step, as the solution of raw material of noble metal component, two kinds of solutions, that is, a solution containing a platinum compound and a solution containing a platinum compound and a palladium compound, are provided. Then, each solution is separately supported on a heat-resistant inorganic oxide. As a supporting means, any one of impregnating method, ion exchange method, kneading method, and the like may be employed. In this step, an acid or an alkaline compound for adjusting pH as appropriate, and a surfactant, a dispersing resin, or the like for adjusting viscosity or improving dispersing property of slurry can be compounded. After that, the heat-resistant inorganic oxide containing the noble metal component is dried at 50 to 200°C to remove the solvent.

And, after obtaining at least two types of catalyst base materials of a heat-resistant inorganic oxide containing platinum compound and a heat-resistant inorganic oxide containing platinum and palladium compound, these catalyst base materials are mixed together. The mixing is done in such a ratio that weight ratio of platinum (Pt) to platinum - palladium (Pt-Pd) becomes preferably 1:20 to 20:1. As a mixing method for the catalyst base materials containing noble metal component and heat-resistant inorganic oxide, pulverization and mixing by ball mill or the like can be applied, but other pulverization or mixing methods may be applied. Pulverization is carried out under such condition that particle size of catalyst base material becomes preferably 1 to 20 µm. In the last step, the mixture of the catalyst base materials is molded if necessary, thereafter calcined at 300 to 1,200°C to obtain a catalyst composition. Calcination temperature is preferably 300 to 1,200°C, and more preferably 400 to 800°C. As for heating means, known heating means such as electric furnace, gas furnace can be used.

It should be noted that in the catalyst of the present invention, besides the essential components of the catalyst of the present invention, known catalyst materials may be compounded as oxygen storage-release component, base material, binder, and the like. Such known catalyst materials include cerium - zirconium type composite oxide, cerium oxide, titania, zirconia, zeolite, alumina, silica, silica-alumina, alkalimetalmaterial, alkaline earth metal material, transition metal material, rare earth metal material, and the like, and in this case, a dispersing agent and a pH adjuster can be also used in combination.

### 3. Exhaust gas purification catalyst for automobile

The exhaust gas purification catalyst for automobile of the present invention is a catalyst in which the above catalyst composition of the present invention is coated on the surface of a monolithic structure type carrier which allows exhaust gas to pass through.

The catalyst composition of the present invention is desirably used as a structure type catalyst in which the above composite is coated on the surface of carrier. Here, shape of the carrier is not particularly limited, and any one can be selected from columnar, cylindrical, spherical, honeycomb-like, sheet-like, and the like. Size of the structure type carrier is not particularly limited, but the one having a diameter of, for example, several to several ten mm can be used, if the carrier is any one of columnar, cylindrical or spherical. As the structure type carrier, monolithic structure type carrier in which exhaust gas can pass through is preferable.

### (Monolithic structure type carrier)

The monolithic structure type carrier is preferably a honeycomb structure made of metal or ceramics. In addition, as a shape of such honeycomb structure, flow-through type and wall flow type are known, but the monolithic structure type carrier to be used in the present invention is preferably a flow through type carrier. Material of the honeycomb structure is generally stainless steel in the case of metal, but is cordierite, mullite, alumina, magnesia, titania, spinel, silicon carbide, and the like, in the case of ceramics. Among these materials, cordierite is preferable from the viewpoints of good formability in producing honeycomb as well as superior heat resistance and mechanical strength.

Further, as other shapes of the monolithic structure type carrier, in addition to this, a sheet-like structure made by knitting a thin fibrous material and a felt-like incombustible structure consisting of a comparatively thick fibrous material can be used. It should be noted that these monolithic structure type carriers consisting of fibrous materials can enhance a treating ability compared with other structure type carriers, due to a greater amount of metal catalyst component to be supported and a larger contact area with exhaust gas.
In the use of the present invention, a cordierite-made flow-through type carrier is preferable from the viewpoint of possible enhancement in easiness in production, strength as a structure, inhibition of pressure loss accompanied by installation of a structure type catalyst (sustainment of easy passing through of exhaust gas), amount of catalyst composition to be coated, and the like, to enhance stability.
External shape of this monolithic structure type carrier is optional, and any one of columnar type having a cross-section of perfect circle or oval, square pole type, hexagonal columnar type, and the like, can be selected depending on a structure of exhausting system to which the monolithic structure type carrier is applied. The number of hole in opening part of the monolithic structure type carrier may also be decided as appropriate considering kind of exhaust gas to be treated, flow rate of gas, pressure loss or removal efficiency, or the like, but is desirably around 10 to 1,500 holes per square inch (1.5-2.32.5 cells/cm²) as automobile exhaust gas purification use.

In the case of honeycomb-shaped carrier like a flow-through type carrier, its structural character is represented by cell density. In the present invention, honeycomb structure (D) is preferably a flow-through type carrier having a cell density of 10 to 1,500 cell/inch² (1.5-2.32.5 cells/cm²), and particularly preferably 200 to 900 cell/inch² (31-139.5 cells/cm²). When cell density is 10 cell/inch² or more, a contact area of exhaust gas and catalyst required for purification can be secured, and an exhaust gas purification performance with a superior structural strength can be obtained, and when cell density is 1,500 cell/inch² or less, a sufficient contact area of exhaust gas and catalyst can be secured without significantly losing pressure of exhaust gas from internal combustion engine and without impairing performance of internal combustion engine. In particular, in the use of the present invention, a flow-through type carrier having a cell density of 300 to 900 cell/inch² (46.5-139.5 cells/cm²) is preferable from the viewpoint of inhibiting a pressure loss.

In addition, the aforementioned essential constituents are preferably used in the following weight per unit volume of monolithic structure type carrier. Total coating amount of the catalyst composition is 30 to 400 g/L, and preferably 80 to 250 g/L. When total coating amount of catalyst composition per unit volume of monolithic structure type carrier is over 400 g/L, clogging occurs when catalyst component is coated and a sufficient function might not be obtained, in the case of a honeycomb structure usually used, and when the coating amount is less than 30 g/L, a sufficient amount of catalytically active species to exert an activity cannot be stably dispersed due to too small amount of the heat-resistant inorganic oxide, and necessary durability might not be obtained.

Coating amount of the catalyst composition on the monolithic structure type carrier must be such an amount so that a prescribed amount of noble metal catalyst is contained. Among the noble metal catalyst components, amount of Pt existing in a state of elemental substance is set to be 0.1 to 10 g/L, and preferably 0.3 to 3 g/L, and amount of Pt-Pd is set to be 0.1 to 10 g/L, and preferably 0.3 to 3 g/L. When amount of Pt existing in a state of elemental substance is less than 0.1 g/L, sufficient levels of oxidizing activity and heat generating activity might not be obtained, and even when Pt over 10 g/L is used, more improvement in effect than the amount used might not be obtained, and moreover, distance between Pt particles in the catalyst composition becomes close to each other. As described above, a close distance between Pt particles makes difficult to stably maintain the dispersed state of Pt, and may induce sintering leading to growth to too big Pt particles, and may hardly secure an active surface area corresponding to the amount of Pt used.
When amount of Pt-Pd is less than 0. 1 g/L, sufficient levels of oxidizing activity, heat generating activity, and cracking performance for long chain HC might not be obtained, and even when Pt-Pd over 10 g/L is used, more improvement in effect than the amount used might not be obtained, and moreover, even a Pd hardly to be sintered is contained, distance between particles in the catalyst composition becomes close to each other even Pd which is hardly sintered is contained, and it might become difficult to stably maintain the dispersed state.

In addition, weight ratio of Pt to Pd in Pt-Pd is 1:20 to 20:1, and preferably 1:10 to 10:1. When content of Pt in Pt-Pd is more than Pt : Pd = 20:1 under excess of Pt, an effect of alloying with Pd can be hardly obtained. In addition, when content of Pd is more than Pt : Pd = 1:20 under excess of Pd component, oxidizing activity itself necessary for implementing the present invention might not be obtained.

### (Production method for monolithic structure type catalyst)

Production of the monolithic structure type catalyst of the present invention can be carried out by the conventional methods as appropriate, but one example thereof is given below.
The monolithic structure type catalyst of the present invention can be produced by using catalyst base materials in which the noble metal components obtained by the above method have been separately supported on a heat-resistant inorganic oxide in advance, or a mixture of raw materials of noble metal components, a heat-resistant inorganic oxide and an aqueous medium in a state of slurry, coating the catalyst base materials or the mixture in a state of slurry on a monolithic structure type carrier, drying and calcining. Namely, the monolithic structure type catalyst of the present invention is obtained by coating the catalyst base materials or the mixture in a slurry state containing each component on a monolithic structure type carrier, and heating, or the catalyst can also be obtained by preparing a calcined catalyst composition by calcining the slurry itself in advance, thereafter by pulverizing separately and supporting on a structure type carrier.
In addition, as for the production method of the monolithic structure type catalyst, in addition to the method using the catalyst base materials in which the noble metal components are supported on a heat-resistant inorganic oxide in advance as mentioned above, the noble metal component may be produced by preparing a slurry containing raw materials of Pt and Pd, one of which has a higher molar ratio than the other as for the noble metal component, together with other materials, and coating the slurry on the monolithic structure type carrier, then drying and heating. It should be noted that amounts of raw materials of Pt and Pd to be used vary depending on other catalyst materials or production method, and may be set as appropriate. By producing under the proper conditions, the monolithic structure type catalyst containing Pt and Pt-Pd can be obtained.

It should be noted that when the heat-resistant inorganic oxide and all or a part of the noble metal components are used by compounding in a slurry as a form of each precursor, the above catalyst materials or base materials supporting noble metal components and an aqueous medium are mixed in a prescribed ratio to obtain a mixture in a slurry state. Here, the aqueous medium is used in such an amount that the above catalyst materials or the base materials supporting noble metal components and the noble metal catalyst component can be uniformly dispersed in the slurry. In addition, another catalyst composition may be coated repeatedly thereon if necessary.
In preparation of the slurry, an acid or an alkali for adjusting pH, and a surfactant, a dispersing resin, or the like for adjusting viscosity and improving dispersing property of slurry can be compounded, if necessary. As a mixing method of slurry, pulverizing and mixing by ball mill, etc. can be applied, but other pulverizing or mixing method may be applied.

Next, the catalyst base material or the mixture in slurry state is coated on the monolithic structure type carrier. Coating method is not particularly limited, but wash coat method is preferable. By coating, followed by drying and calcining, the monolithic structure type catalyst in which the catalyst composition is supported can be obtained. It should be noted that drying temperature is preferably 100 to 300°C, and more preferably 100 to 200°C. In addition, calcination temperature is preferably 300 to 1, 200°C, more preferably 400 to 800°C, and particularlypreferably400 to 600°C. As for heating means, known heating means such as electric furnace, gas furnace, and the like can be used.

### 4. Exhaust gas purification catalyst system and exhaust gas purification process

The exhaust gas purification catalyst for automobile of the present invention exerts extremely superior characteristics, when it is used as an oxidation catalyst (DOC) intending mainly combustion of various hydrocarbon components contained in exhaust gas. Various hydrocarbon components mean gasoline component, decomposition products thereof etc. in the case of exhaust gas exhausted from gasoline engines, and kerosene component, light oil component, heavy oil component, further decomposition products thereof etc. in the case of exhaust gas exhausted from diesel engines.

If the catalyst of the present invention is used only for combusting various hydrocarbons contained in exhaust gas, the exhaust gas purification catalyst system of the present invention becomes such a very simple one in which the above exhaust gas purification catalyst (DOC) for automobile is placed in a flow path of exhaust gas from automobile. It should be noted that, since the catalyst of the present invention has an oxidizing activity, it is obvious that the catalyst has an oxidizing performance not only for HC exhausted from combustion chamber but also for CO. In addition, a method for selectively reducing nitrogen oxides in exhaust gas by supplying a reducing agent such as ammonia component and light oil component will be mentioned later, however, the catalyst of the present invention can be used as a catalyst (R-DOC) to oxidize NH₃ unexpended and leaked from SCR, which is a catalyst layer thereof, or HC unexpended in LNT.

In the exhaust gas purification catalyst system of the present invention, there are various embodiments in addition to this, and a representative example of them includes a system in which the exhaust gas purification catalyst is placed in a flow path of exhaust gas exhausted from diesel engines mounted on an automobile, and a filter to collect harmful particle component contained in exhaust gas exhausted from diesel engines is placed in the subsequent stage.
Namely, the exhaust gas purification catalyst system comprises a light oil spraying means and the above exhaust gas purification catalyst (DOC) for automobile which are placed in a flow path of automobile exhaust gas exhausted fromdiesel engines, and a filter (DPF) to collect harmful particle component which is placed in the subsequent stage thereto. In this case, exhaust gas is purified by using the above exhaust gas purification catalyst system; supplying a light oil component in the preceding stage of the exhaust gas purification catalyst (DOC) for automobile in a flow path of exhaust gas exhausted from diesel engines and contacting with said catalyst to heat up the exhaust gas as well as converting NO in the exhaust gas to NO₂ by oxidation; and collecting harmful particle component with a filter (DPF) and combusting the collected harmful particle component utilizing said heated exhaust gas in the subsequent stage thereto.

This layout is characterized in that the filter in the preceding stage of the selective catalytic reduction catalyst and the catalyst of the present invention in the preceding stage of the filter are placed. Since the catalyst of the present invention is an oxidation catalyst, reactions occurring in the filter are, so to speak, oxidation reactions. In these oxidation reactions, NOₓ component could be newly generated from N component. However, if the catalyst of the present invention and the filter are placed in the preceding stage of the selective catalytic reduction catalyst, the NOₓ newly generated here can be purified with the selective catalytic reduction catalyst, and an extra NOₓ is not exhausted.

### (Combustion of harmful particle component)

In the filter placed in a flow path of exhaust gas from diesel engines, harmful particle component is deposited. In order to remove this, the catalyst of the present invention is placed in the preceding stage of the filter in the flow path, and a fuel is supplied from the upstream side of the catalyst. As for method for supplying a fuel, in addition to a method of spraying directly into a flow path of exhaust gas, a fuel may be supplied after heating to vaporize separately and reforming as appropriate, and supplying method may be sprayed into a flow path of exhaust gas. Fuel component to be supplied is generally light oil component in the case of purification of exhaust gas exhausted from diesel engines. The fuel component supplied into a flow path of exhaust gas has a contact with the catalyst of the present invention together with NO. In such way, exhaust gas is heated up, NO is converted to NO₂, and amount of NO₂ component in NOₓ increases.

Thus reformed exhaust gas has a contact with harmful particle component collected by the filter placed in the subsequent stage of the catalyst of the present invention, combusts and removes the harmful particle component by heat, NO₂, and in some cases oxygen remaining in exhaust gas, to regenerate the filter. The catalyst of the present invention exerts a superior regenerating ability for filter because of superior NO₂-forming ability and heat generation ability compared with similar techniques which have been conventionally proposed.
It should be noted that, as a filter, well known filters can be used as appropriate, and a filter having only filtering function or a filter having also a catalytic function containing noble metal component, for example, those having a supported oxidative active species such as Pt, Pd may be used. In addition, the filter may be coated with the catalyst composition of the present invention.

The exhaust gas purification catalyst for automobile of the present invention can be applied not only for combusting harmful particle component contained in automobile exhaust gas, but also for a purpose of purification of NOₓ, or simultaneous treatment of combustion of harmful particle component and purification of NOₓ.
Specifically, as an exhaust gas purification catalyst system, for example, an exhaust gas purification catalyst system is used, wherein a light oil spraying means and the above-described exhaust gas purification catalyst (DOC) for automobile are placed in a flow path of automobile exhaust gas exhausted fromdiesel engines, and a filter (DPF) to collect harmful particle component and a catalyst (LNT) to collect nitrogen oxides and reduce and purify with hydrocarbon are placed sequentially in the subsequent stage thereto. In this case, exhaust gas is purified by using the above described exhaust gas purification catalyst system; supplying a light oil component in the preceding stage of the exhaust gas purification catalyst (DOC) for automobile in a flow path of exhaust gas exhausted from diesel engines and contacting with said catalyst to heat up the exhaust gas as well as converting NO in the exhaust gas to NO₂ by oxidation; collecting harmful particle component with a filter (DPF) as well as combusting the collected harmful particle component utilizing said heated exhaust gas in the subsequent stage thereto; subsequently contacting remaining hydrocarbon (HC) and NO₂ with a catalyst (LNT) to reduce and purify nitrogen oxides in the exhaust gas. As the hydrocarbon (HC) used in the LNT as a reducing component, in addition to the above, an extra fuel is supplied in an internal combustion engines to increase hydrocarbon (HC) concentration in the exhaust gas, and said hydrocarbon is sometimes used.
Thus, since LNT purifies NOₓ using hydrocarbon (HC) as a reducing component, LNT is sometimes called as HC-SCR.

In addition, as another embodiment, an exhaust gas purification catalyst system is employed, wherein a light oil spraying means and the above-described exhaust gas purification catalyst (DOC) for automobile are placed in a flow path of automobile exhaust gas exhausted from diesel engines, anda filter (DPF) to collect harmful particle component, an ammonia component supplying means, and a selective catalytic reduction catalyst (SCR) to reduce and purify nitrogen oxides using the ammonia component as a reducing agent are placed in the subsequent stage thereto. In this case, exhaust gas is purified by using the above-described exhaust gas purification catalyst system; supplying a light oil component in the preceding stage of the exhaust gas purification catalyst (DOC) for automobile in a flow path of exhaust gas exhausted from diesel engines and contacting with said catalyst to heat up the exhaust gas as well as converting NO in the exhaust gas to NO₂ by oxidation; collecting harmful particle component with a filter (DPF) as well as combusting the collected harmful particle component utilizing said heated exhaust gas in the subsequent stage thereto; subsequently spraying ammonia component from ammonia component supplyingmeans, then contacting nitrogen oxides in the exhaust gas with a selective catalytic reduction catalyst (SCR) to reduce and purify with ammonia. Alternatively, exhaust gas is purified by using the above-described exhaust gas purification catalyst system; supplying a light oil component in the preceding stage of the exhaust gas purification catalyst (DOC) for automobile in a flow path of exhaust gas exhausted from diesel engines and contacting with said catalyst to heat up the exhaust gas as well as converting NO in the exhaust gas to NO₂ by oxidation; spraying ammonia component from ammonia component supplying means, then contacting nitrogen oxides in the exhaust gas with a selective catalytic reduction catalyst (SCR) to reduce and purify with ammonia; and collecting harmful particle component with a filter (DPF) and combusting the collected harmful particle component utilizing said heated exhaust gas in the subsequent stage thereto.

### (Purification of NOₓ)

In the purification of NOₓ in exhaust gas, its main actions are as described below. Namely, the catalyst of the present invention is placed in a flow path of exhaust gas exhausted from lean combustion engines such as diesel engine, and by an action of the catalyst of the present invention, NO in the exhaust gas is converted to NO₂ to increase NO₂ component concentration in NOₓ. In NH₃-SCR, the exhaust gas containing thus increased concentration of NO₂ component contacts with a selective catalytic reduction catalyst placed in the subsequent stage to the catalyst of the present invention together with ammonia component to purify NOₓ in exhaust gas.
Here, supply of the ammonia component may be carried out by directly spraying an aqueous NH₃ solution in a flow path of exhaust gas, but is desirable to be supplied as an aqueous urea solution from the viewpoints of safety and easiness in handling. The aqueous urea solution may be directly supplied into a flow path of exhaust gas, or may be supplied after reformed to more reactive NH₃ by reforming as appropriate in the flowpath of exhaust gas or before spraying into the flow path of exhaust gas.

### (Simultaneous treatment for combustion of harmful particle component and purification of NOₓ)

As described above, the present invention enables to purify harmful particle component and NOₓ, but one of further features of the present invention is a superior ability to treat such harmful particle component deposited on a filter and NOₓ with a single catalyst system.

In the exhaust gas purification catalyst system which the present invention can be used, NO₂ is utilized in both treatments of harmful particle component and NOₓ. Since the catalyst of the present invention is superior in converting ability from NO to NO₂, when a filter and a selective catalytic reduction catalyst are placed in a same catalyst system, NO₂ can be supplied to both in a high concentration, and therefore, an excellent effect can be exerted in the catalyst system which simultaneously treats combustion of harmful particle component and purification of NOₓ.
Here, in combustion and purification of the harmful particle component, a fuel is sometimes supplied to the catalyst of the present invention, however, even in such a case, Pt is not deactivated because poisoning of Pt by a fuel is inhibited, and the catalyst system of the present invention can raise exhaust gas temperature in necessary time and up to necessary temperature, and is superior in converting ability from NO to NO₂.

As for exhaust gas atmosphere of automobile, amount of HC and composition of its components vary every hour depending on its controlling condition and operating condition. Even under such circumstance, by the present invention, by using the catalyst of the present invention which can maintain a superior oxidizing performance for HC and heat generating performance, or the above-described exhaust gas purification catalyst system combining the catalyst of the present invention with DPF, SCR and LNT, NO component in exhaust gas can be purified in a high efficiency, harmful particle component can be combusted, and regeneration of filter can be carried out.

Hereinbefore, representative catalyst layouts, to which the present invention is applied, are described, but the catalyst of the present invention can be used in layouts other than the above layout. Hereinafter, examples of layout in which the catalyst of the present invention can be used are listed up using abbreviations or symbols including those exemplified before. It should be noted that "(Fuel)" represents supply of a fuel, and "(NH₃)" represents supply of a NH₃ component. In addition, "DOC" represents an oxidation catalyst, "SCR" represents a selective catalytic reduction catalyst, "(R-DOC)" represents a catalyst to oxidize NH₃ unexpended and leaked from SCR and HC unexpended in LNT, "(DPF)" represents a filter, and "(LNT)" represents a catalyst to adsorb nitrogen oxides and reduce and purify them with hydrocarbon.
Layout 1: (Fuel) + the catalyst + DPF + (NH₃) + SCR
Layout 2: (Fuel) + the catalyst + DPF + (NH₃) + SCR + R-DOC
Layout 3: (Fuel) + the catalyst + (NH₃) + SCR + DPF
Layout 4: (Fuel) + the catalyst + DPF
Layout 5: the catalyst + (Fuel) + DPF
Layout 6: the catalyst + (Fuel) + DPF + (NH₃) + SCR
Layout 7: the catalyst + (Fuel) + DPF + (NH₃) + SCR + R-DOC
Layout 8: the catalyst + (NH₃) + SCR
Layout 9: the catalyst + (NH₃) + SCR + (Fuel) + DPF
Layout 10: (Fuel) + the catalyst + DPF + LNT
Layout 11: (Fuel) + the catalyst + DPF + LNT + R-DOC
Layout 12: (Fuel) + the catalyst + LNT + DPF
Layout 13: the catalyst + (Fuel) + DPF + LNT
Layout 14: the catalyst + (Fuel) + DPF + LNT + R-DOC
Layout 15: the catalyst + LNT
Layout 16: the catalyst + LNT + (Fuel) + DPF
It should be noted that, in the above examples of layout, any of "DPF", "SCR" and "R-DOC" which are used in combination with the catalyst of the present invention can use known catalyst as appropriate, in an extent not to impair the performance of the present invention.

### Example

Hereinafter, features of the present invention will be further clarified by showing Examples and Comparative Examples. It should be noted that the present invention is not limited by embodiments of these Examples in any way. It should be noted that the catalysts used in the Examples and Comparative Examples were prepared according to the methods shown below.

### Example 1

### (The catalyst composition of the present invention)

Commercially available lanthanum-added γ-alumina (specific surface area: 220 m²/g, Al₂O₃/La₂O₃ (weight ratio) = 98.9/1.6) (500 g) was impregnated with an aqueous platinic chloride solution so that content of Pt became 1% by weight in Pt equivalent, dried at 100°C for 1 hour, then calcined in an electric furnace under the atmospheric condition at 500°C for 1 hour, followed by cooling then pulverizing, to obtain Pt-supported alumina.
Commercially available lanthanum-added γ-alumina (specific surface area: 220 m²/g, Al₂O₃/La₂O₃ (weight ratio) = 98.4/1.6) (500 g) was impregnated with a mixed solution of an aqueous platinic chloride solution and an aqueous palladium nitrate solution so that contents of Pt and Pd became each 1% by weight in terms of Pt and Pd, respectively, dried at 100°C for 1 hour, then calcined in an electric furnace under the atmospheric condition at 500°C for 1 hour, followed by cooling then pulverizing, to obtain Pt-Pd-supported alumina. Thus obtained Pt-Pd-supported alumina was measured by X-ray Photoelectron Spectroscopy (XPS) to confirm that Pt and Pd were alloyed.

For the catalyst composition obtained in Example 1, noble metal particles were identified using a Transmission Electron Microscope (TEM), and microscopic analysis was carried out by an ancillary Energy Dispersive X-ray Fluorescence Spectrometer (EDX).
Fig. 1 shows a micrograph by TEM of the catalyst composition, and results of analyses by EDX for "1780-01" and "1780-02" in Fig. 1 are shown in Fig. 2 and Fig. 3, respectively. In each EDX chart, atomic symbols are given to characteristic peaks. It can be understood that in the "1780-01" in Fig. 2, a characteristic peak for alloying of Pt-Pd appears, whereas in the "1780-02" in Fig. 3, no peak showing presence of Pd is seen.

### (Monolithic structure type catalyst)

The above-described 2 types of alumina-supported noble metal components were added with water, milled using an alumina bowl to obtain a slurry. A cordierite-made flow through type carrier (400 cell/inch² (62 cells/cm²), cell wall thickness: 6/1, 000 [inch] (0.15 mm), diameter: 5.66 [inch] (14.4 cm), length: 6 [inch] (15.2 cm)) was impregnated with the slurry. After blowing off extra slurry using an air gun, the carrier was dried at 100°C for 1 hour, then calcined at 500°C to obtain a catalyst. Thus obtained catalyst was aged in an electric furnace under the atmospheric condition at 800°C for 20 hours. Catalyst composition of the resultant monolithic structure type catalyst is shown in Table 1.
As for the noble metal particles, a distance between noble metal particles was several nmbefore the aging procedure (fresh), whereas in a state where noble metal particles were stabilized after the aging by heating at 800°C for 20 hours as described above in "heating conditions", nearly 80% of noble metal particles have a distance of 30 to 100 nm. This measurement was carried out by embedding the catalyst with a resin, slicing to a 100 nm thick thin film by a microtome, taking a micrograph using a TEM, and measuring a distance between adjacent particles for particles of 5 to 50 nm.

### Comparative Example 1

### (Catalyst composition)

Commercially available lanthanum-added γ-alumina (specific surface area: 220 m²/g, Al₂O₃/La₂O₃ (weight ratio) = 98.4/1.6) (500 g) was impregnated with an aqueous platinic chloride solution so that content of Pt became 2% by weight in terms of Pt, dried at 100°C for 1 hour, then calcined in an electric furnace under the atmospheric condition at 500°C for 1 hour, followed by cooling then pulverizing, to obtain Pt-supported alumina.
Commercially available lanthanum-added γ-alumina (specific surface area: 220 m²/g, Al₂O₃/La₂O₃ (weight ratio) = 98.4/1.6) (500 g) was impregnated with an aqueous palladium nitrate solution so that content of Pd became 1% by weight in Pd equivalent, dried at 100°C for 1 hour, then calcined in an electric furnace under the atmospheric condition at 500°C for 1 hour, followed by cooling then pulverizing, to obtain Pd-supported alumina.
Using the thus obtained catalyst compositions, a monolithic structure type catalyst of Comparative Example 1 was obtained in the same way as in Example 1. Catalyst composition of the resultant monolithic structure type catalyst is shown in Table 1.

### Comparative Example 2

### (Catalyst composition)

A mixed solution of an aqueous platinic chloride solution and an aqueous palladium nitrate solution was prepared, and commercially available lanthanum-added γ-alumina (specific surface area: 220 m²/g, Al₂O₃/La₂O₃ (weight ratio) = 98.4/1.6) (1, 000 g) was impregnated with the mixed solution so that contents of Pt and Pd became 2% by weight in Pt equivalent and 1% by weight in Pd equivalent, respectively, dried at 100°C for 1 hour, then calcined in an electric furnace under the atmospheric condition at 500°C for 1 hour, followed by cooling then pulverizing, to obtain Pt-Pd - supported alumina. Thus obtained alumina-supported Pt-Pd was measured by X-ray Photoelectron Spectroscopy (XPS) to confirm presence of alloyed Pt-Pd, and presence of Pt or Pd each existing in a state of elemental substance was not observed.
Using the thus obtained catalyst composition, a monolithic structure type catalyst of Comparative Example 2 was obtained in the same way as in Example 1. Catalyst composition of the resultant monolithic structure type catalyst is shown in Table 1.

**[Table 1]**

| | Example 1[g/L] | Comparative Example 1 [g/L] | Comparative Example 2 [g/L] |
|---|---|---|---|
| Total coating amount of catalyst composition | 140 | 140 | 140 |
| Pt | 0.7 | 1.4 | |
| Pt-Pd | 1.4 | | 2.1 |
| Pd | | 0.7 | |

In the catalyst obtained in Comparative Example 1, a characteristic peak by alloying of Pt-Pd as in "1780-01" in Fig. 2 could not be identified. Also, in Comparative Example 2, although particles, in which the characteristic peak by alloying of Pt-Pd could be identified, were observed, any particle showing presence of Pt in a state of elemental substance was not identified.
In addition, the catalyst compositions of Example 1, Comparative Example 1 and Comparative Example 2 were analyzed by X-ray Diffraction (XRD : X-Ray Diffraction) to examine existence states of noble metal components. Results are shown in Fig. 4.
Fig. 4 shows peaks of Pt taken out from the analysis results, and in Comparative Example 1, a peak of Pt not affected by alloying was identified and any peak of Pt affected by alloyed Pt-Pd was not identified. Also, in Comparative Example 2, a peak of Pt affected by alloyed Pt-Pd was identified but any peak of Pt not affected by alloying was not identified.
On the contrary, a peak of Pt in Example 1 appeared between "a peak of Pt not affected by alloying" and "a peak of Pt affected by alloying", suggesting that Pt-Pd in a state of alloy and Pt in a state of elemental substance were mixed. Thus, in the catalyst of Example 1, presences of Pt and Pt-Pd were identified microscopically and also macroscopically, differing from the catalysts of Comparative Example 1 and Comparative Example 2.

### (Evaluation of NO → NO₂ conversion performance)

Each of the monolithic structure type catalysts obtained as above was cut out in a carrier size [diameter: 1 inch (2.54 cm), length: 6 inches,(15.2 cm)], and conversion efficiency from NO to NO₂ was measured under the following model gas conditions. Measurement results are shown in Fig. 5 and Fig. 6.
In particular, in Comparative Example 2, it can be understood that a superior oxidizing performance of Pt for NO is inhibited and conversion efficiency from NO to NO₂ is significantly lowered because all of Pt and Pd are alloyed.

### [Gas conditions for measurement]

* O₂ : 10% by volume
* CO₂ : 6% by volume
* CO: 300 ppm
* HC (in Cl equivalent): 300 ppm (C₂H₆ : C₃H₈ = 4:1)
* NO: 300 ppm
* H₂O: 6% by volume
* SV: 40,000/h
* Temperature range: 150 to 400°C

### (Evaluation of temperature raising performance)

Using a monolithic structure type catalyst similar to those used for the evaluation of NO → NO₂ conversion performance, evaluation of temperature raising performance for exhaust gas was carried out under the following conditions. Measurement results are shown in Fig. 7 and Fig. 8.
It can be understood that the catalyst of Example 1 is more superior in oxidizing performance and has a higher temperature raising performance compared with the catalysts of Comparative Example 1 and Comparative Example 2. In particular, it can be understood that Comparative Example 1, in which Pt is contained in a state of elemental substance, is significantly inferior in the temperature raising performance due to effect of the HC component in light oil.

### [Fuel supplying conditions]

* Engine : Diesel engine, 2 L
* Temperature of introduced exhaust gas: 250°C
* Amount of sprayed light oil: 10 cc was sprayed into exhaust pipe for 3 minutes at 3 minutes interval
* SV (space velocity): 72,000/h

### (Evaluation of sintering)

Evaluation of sintering was carried out for the catalyst compositions of Example 1, Comparative Example 1 and Comparative Example 2 under the following heating conditions.

### [Heating conditions]

* Temperature: 800°C
* Time: 20 hours
* Calcination equipment: Electric furnace
* Atmosphere: Atmospheric condition

On the catalysts after evaluating temperature raising performance, presence of sintered particle over 100 nm for Pt and Pt-Pd was examined using a TEM, and Example 1 and Comparative Example 2 showed less amount of the particle compared with that of Comparative Example 1.

## Claims

1. An exhaust gas purification catalyst composition for automobile **characterized in that**:
the exhaust gas purification catalyst composition comprises a catalyst composition in which a noble metal catalyst component (A) is supported on a heat-resistant inorganic oxide (B), and oxidizes NO in automobile exhaust gas; and
the noble metal catalyst component (A) comprises platinum (Pt) existing in a state of elemental substance in the catalyst composition and platinum - palladium (Pt-Pd) existing in a state of alloy in the catalyst composition, wherein platinum (Pt) and platinum - palladium (Pt-Pd) are present in a weight ratio of 1:20 to 20:1.

2. The exhaust gas purification catalyst composition for automobile according to claim 1, **characterized in that** an average particle size of the noble metal catalyst component (A) is 2 to 50 nm.

3. The exhaust gas purification catalyst composition for automobile according to claim 2, **characterized in that** a distance between adjacent particles of the noble metal catalyst component (A) is 5 to 300 nm.

4. The exhaust gas purification catalyst composition for automobile according to any one of claims 1 to 3, **characterized in that**, in the noble metal catalyst component (A), platinum (Pt) and platinum - palladium (Pt-Pd) are supported separately on a heat-resistant inorganic oxide (B) in advance.

5. The exhaust gas purification catalyst composition for automobile according to claim 1, **characterized in that** the heat-resistant inorganic oxide (B) is γ-Al₂O₃ or lanthanum-added γ-Al₂O₃.

6. An exhaust gas purification catalyst for automobile, **characterized in that** the catalyst composition according to any one of claims 1 to 5 is coated on a monolithic structure type carrier having a honeycomb shape, and total coating amount of said catalyst composition per unit volume of the monolithic structure type carrier is 30 to 400 g/L.

7. The exhaust gas purification catalyst for automobile according to claim 6, **characterized in that** weights of platinum (Pt) existing in a state of elemental substance in the catalyst composition and platinum - palladium (Pt-Pd) existing in a state of alloy in the catalyst composition per unit volume of the monolithic structure type carrier are each 0.1 to 10 g/L.

8. An exhaust gas purification catalyst system, wherein a light oil spraying means and the exhaust gas purification catalyst (DOC) for automobile according to claim 6 or 7 are placed in a flow path of automobile exhaust gas exhausted from diesel engines, and a filter (DPF) to collect harmful particle component is placed in the subsequent stage thereto.

9. An exhaust gas purification catalyst system, wherein a light oil spraying means and the exhaust gas purification catalyst (DOC) for automobile according to claim 6 or 7 are placed in a flow path of automobile exhaust gas exhausted from diesel engines, and a filter (DPF) to collect harmful particle component and a catalyst (LNT) to collect nitrogen oxides and reduce and purify with hydrocarbon are placed sequentially in the subsequent stage thereto.

10. An exhaust gas purification catalyst system, wherein a light oil spraying means and the exhaust gas purification catalyst (DOC) for automobile according to claim 6 or 7 are placed in a flowpath of automobile exhaust gas exhausted fromdiesel engines, and a filter (DPF) to collect harmful particle component, an ammonia component supplying means, and a selective catalytic reduction catalyst (SCR) to reduce and purify nitrogen oxides using the ammonia component as a reducing agent are placed in the subsequent stage thereto.

11. A purifying process of exhaust gas, **characterized by** using the exhaust gas purification catalyst system according to claim 8; supplying a light oil component in the preceding stage of the exhaust gas purification catalyst (DOC) for automobile in a flow path of exhaust gas exhausted from diesel engines and contacting with said catalyst to heat up the exhaust gas as well as converting NO in the exhaust gas to NO₂ by oxidation; and collecting harmful particle component with a filter (DPF) in the subsequent stage thereto as well as combusting the collected harmful particle component utilizing said heated exhaust gas.

12. Apurifyingprocess of exhaust gas, **characterized by** using the exhaust gas purification catalyst system according to claim 9. supplying a light oil component in the preceding stage of the exhaust gas purification catalyst (DOC) for automobile in a flow path of exhaust gas exhausted from diesel engines and contacting with said catalyst to heat up the exhaust gas as well as converting NO in the exhaust gas to NO₂ by oxidation; collecting harmful particle component with a filter (DPF) in the subsequent stage thereto as well as combusting the collected harmful particle component utilizing said heated exhaust gas; subsequently contacting remaining hydrocarbon and NO₂ with a catalyst (LNT) to reduce and purify nitrogen oxides in the exhaust gas.

13. Apurifyingprocess of exhaust gas, **characterized by** using the exhaust gas purification catalyst system according to claim 10; supplying a light oil component in the preceding stage of the exhaust gas purification catalyst (DOC) for automobile in a flow path of exhaust gas exhausted from diesel engines and contacting with said catalyst to heat up the exhaust gas as well as converting NO in the exhaust gas to NO₂ by oxidation; collecting harmful particle component with a filter (DPF) in the subsequent stage thereto as well as combusting the collected harmful particle component utilizing said heated exhaust gas; subsequently spraying ammonia component fromammonia component supplyingmeans, then contacting nitrogen oxides in the exhaust gas with a selective catalytic reduction catalyst (SCR) to reduce and purify with ammonia.

14. A purifying process of exhaust gas, **characterized by** using the exhaust gas purification catalyst system according to claim 10; supplying a light oil component in the preceding stage of the exhaust gas purification catalyst (DOC) for automobile in a flow path of exhaust gas exhausted from diesel engines and contacting with said catalyst to heat up the exhaust gas as well as converting NO in the exhaust gas to NO₂ by oxidation; spraying ammonia component from ammonia component supplying means, then contacting nitrogen oxides in the exhaust gas with a selective catalytic reduction catalyst (SCR) to reduce and purify with ammonia; collecting harmful particle component with a filter (DPF) in the subsequent stage thereto as well as combusting the collected harmful particle component utilizing said heated exhaust gas.

## Patentansprüche

1. Abgasreinigungskatalysatorzusammensetzung für Kraftfahrzeuge, **dadurch gekennzeichnet, dass**
die Abgasreinigungskatalysatorzusammensetzung eine Katalysatorzusammensetzung umfasst, in der eine Edelmetallkatalysatorkomponente (A) auf einem wärmebeständigen anorganischen Oxid (B) geträgert ist, und NO in einem Kraftfahrzeugabgas oxidiert, und
die Edelmetallkatalysatorkomponente (A) Platin (Pt), das in dem Zustand einer elementaren Substanz in der Katalysatorzusammensetzung vorliegt, und Platin-Palladium (Pt-Pd), das in dem Zustand einer Legierung in der Katalysatorzusammensetzung vorliegt, umfasst, wobei Platin (Pt) und Platin-Palladium (Pt-Pd) in einem Gewichtsverhältnis von 1:20 bis 20:1 vorliegen.

2. Abgasreinigungskatalysatorzusammensetzung für Kraftfahrzeuge nach Anspruch 1, **dadurch gekennzeichnet, dass** die durchschnittliche Teilchengröße der Edelmetallkatalysatorkomponente (A) 2 bis 50 nm beträgt.

3. Abgasreinigungskatalysatorzusammensetzung für Kraftfahrzeuge nach Anspruch 2, **dadurch gekennzeichnet, dass** der Abstand zwischen benachbarten Teilchen der Edelmetallkatalysatorkomponente (A) 5 bis 300 nm beträgt.

4. Abgasreinigungskatalysatorzusammensetzung für Kraftfahrzeuge nach einem der Ansprüche 1 bis 3, **dadurch gekennzeichnet, dass** in der Edelmetallkatalysatorkomponente (A) Platin (Pt) und Platin-Palladium (Pt-Pd) im Vorhinein separat auf einem wärmebeständigen anorganischen Oxid (B) geträgert worden sind.

5. Abgasreinigungskatalysatorzusammensetzung für Kraftfahrzeuge nach Anspruch 1, **dadurch gekennzeichnet, dass** das wärmebeständige anorganische Oxid (B) γ-Al₂O₃ oder γ-Al₂O₃ mit zugesetztem Lanthan ist.

6. Abgasreinigungskatalysator für Kraftfahrzeuge, **dadurch gekennzeichnet, dass** die Katalysatorzusammensetzung nach einem der Ansprüche 1 bis 5 auf einem Träger des monolithischen Strukturtyps mit einer Wabenform aufgebracht ist und die Gesamtbeschichtungsmenge der Katalysatorzusammensetzung pro Einheitsvolumen des Trägers des monolithischen Strukturtyps 30 bis 400 g/L beträgt.

7. Abgasreinigungskatalysator für Kraftfahrzeuge nach Anspruch 6, **dadurch gekennzeichnet, dass** die Gewichte von Platin (Pt), das in dem Zustand einer elementaren Substanz in der Katalysatorzusammensetzung vorliegt, und Platin-Palladium (Pt-Pd), das in dem Zustand einer Legierung in der Katalysatorzusammensetzung vorliegt, pro Einheitsvolumen des Trägers des monolithischen Strukturtyps jeweils 0,1 bis 10 g/L betragen.

8. Abgasreinigungskatalysatorsystem, bei dem eine Leichtölsprüheinrichtung und der Abgasreinigungskatalysator (DOC) für Kraftfahrzeuge nach Anspruch 6 oder 7 in einem Strömungsweg eines Kraftfahrzeugabgases angeordnet sind, das von Dieselmotoren abgegeben wird, und ein Filter (DPF) zum Sammeln einer schädlichen Teilchenkomponente in der diesen nachfolgenden Stufe angeordnet ist.

9. Abgasreinigungskatalysatorsystem, bei dem eine Leichtölsprüheinrichtung und der Abgasreinigungskatalysator (DOC) für Kraftfahrzeuge nach Anspruch 6 oder 7 in einem Strömungsweg eines Kraftfahrzeugabgases angeordnet sind, das von Dieselmotoren abgegeben wird, und ein Filter (DPF) zum Sammeln einer schädlichen Teilchenkomponente und ein Katalysator (LNT) zum Sammeln von Stickstoffoxiden und zum Reduzieren und Beseitigen mit Kohlenwasserstoff aufeinander folgend in der diesen nachfolgenden Stufe angeordnet sind.

10. Abgasreinigungskatalysatorsystem, bei dem eine Leichtölsprüheinrichtung und der Abgasreinigungskatalysator (DOC) für Kraftfahrzeuge nach Anspruch 6 oder 7 in einem Strömungsweg eines Kraftfahrzeugabgases angeordnet sind, das von Dieselmotoren abgegeben wird, und ein Filter (DPF) zum Sammeln einer schädlichen Teilchenkomponente, eine Einrichtung zum Zuführen einer Ammoniakkomponente und ein Katalysator zur selektiven katalytischen Reduktion (SCR) zum Reduzieren und Beseitigen von Stickstoffoxiden unter Verwendung der Ammoniakkomponente als Reduktionsmittel in der diesen nachfolgenden Stufe angeordnet sind.

11. Verfahren zum Reinigen eines Abgases, **gekennzeichnet durch** Verwenden des Abgasreinigungskatalysatorsystems nach Anspruch 8, Zuführen einer Leichtölkomponente in der dem Abgasreinigungskatalysator (DOC) für Kraftfahrzeuge vorangehenden Stufe in einen Strömungsweg von Abgas, das von Dieselmotoren abgegeben wird, und Inkontaktbringen mit dem Katalysator zum Erwärmen des Abgases sowie zum Umwandeln von NO in dem Abgas zu NO₂ **durch** Oxidation, und Sammeln einer schädlichen Teilchenkomponente mit einem Filter (DPF) in der diesen nachfolgenden Stufe, sowie Verbrennen der gesammelten schädlichen Teilchenkomponente unter Verwendung des erwärmten Abgases.

12. Verfahren zum Reinigen eines Abgases, **gekennzeichnet durch** Verwenden des Abgasreinigungskatalysatorsystems nach Anspruch 9, Zuführen einer Leichtölkomponente in der dem Abgasreinigungskatalysator (DOC) für Kraftfahrzeuge vorangehenden Stufe in einen Strömungsweg von Abgas, das von Dieselmotoren abgegeben wird, und Inkontaktbringen mit dem Katalysator zum Erwärmen des Abgases sowie zum Umwandeln von NO in dem Abgas zu NO₂ **durch** Oxidation, Sammeln einer schädlichen Teilchenkomponente mit einem Filter (DPF) in der diesen nachfolgenden Stufe, sowie Verbrennen der gesammelten schädlichen Teilchenkomponente unter Verwendung des erwärmten Abgases, anschließend Inkontaktbringen von restlichem Kohlenwasserstoff und NO₂ mit einem Katalysator (LNT) zum Reduzieren und Beseitigen von Stickstoffoxiden in dem Abgas.

13. Verfahren zum Reinigen eines Abgases, **gekennzeichnet durch** Verwenden des Abgasreinigungskatalysatorsystems nach Anspruch 10, Zuführen einer Leichtölkomponente in der dem Abgasreinigungskatalysator (DOC) für Kraftfahrzeuge vorangehenden Stufe in einen Strömungsweg von Abgas, das von Dieselmotoren abgegeben wird, und Inkontaktbringen mit dem Katalysator zum Erwärmen des Abgases sowie zum Umwandeln von NO in dem Abgas zu NO₂ **durch** Oxidation, Sammeln einer schädlichen Teilchenkomponente mit einem Filter (DPF) in der diesen nachfolgenden Stufe, sowie Verbrennen der gesammelten schädlichen Teilchenkomponente unter Verwendung des erwärmten Abgases, anschließend Sprühen einer Ammoniakkomponente von einer Einrichtung zum Zuführen einer Ammoniakkomponente, dann Inkontaktbringen von Stickstoffoxiden in dem Abgas mit einem Katalysator zur selektiven katalytischen Reduktion (SCR) zum Reduzieren und Beseitigen mit Ammoniak.

14. Verfahren zum Reinigen eines Abgases, **gekennzeichnet durch** Verwenden des Abgasreinigungskatalysatorsystems nach Anspruch 10, Zuführen einer Leichtölkomponente in der dem Abgasreinigungskatalysator (DOC) für Kraftfahrzeuge vorangehenden Stufe in einen Strömungsweg von Abgas, das von Dieselmotoren abgegeben wird, und Inkontaktbringen mit dem Katalysator zum Erwärmen des Abgases sowie zum Umwandeln von NO in dem Abgas zu NO₂ **durch** Oxidation, Sprühen einer Ammoniakkomponente von einer Einrichtung zum Zuführen einer Ammoniakkomponente, dann Inkontaktbringen von Stickstoffoxiden in dem Abgas mit einem Katalysator zur selektiven katalytischen Reduktion (SCR) zum Reduzieren und Beseitigen mit Ammoniak, Sammeln einer schädlichen Teilchenkomponente mit einem Filter (DPF) in der diesen nachfolgenden Stufe, sowie Verbrennen der gesammelten schädlichen Teilchenkomponente unter Verwendung des erwärmten Abgases.

## Revendications

1. Une composition catalytique de purification de gaz d'échappement pour automobile **caractérisée en ce que** :
la composition catalytique de purification de gaz d'échappement comprend une composition catalytique dans laquelle un composant catalytique métallique noble (A) est supporté par un oxyde inorganique résistant à la chaleur (B), et oxyde du NO dans le gaz d'échappement d'automobile ; et
le composant catalytique métallique noble (A) comprend du platine (Pt) existant dans un état de substance élémentaire dans la composition catalytique et du platine-palladium (Pt-Pd) existant dans un état d'alliage dans la composition catalytique, dans laquelle du platine (Pt) et du platine-palladium (Pt-Pd) sont présents dans un rapport pondéral de 1:20 à 20: 1.

2. La composition catalytique de purification de gaz d'échappement pour automobile selon la revendication 1, **caractérisée en ce qu'**une taille moyenne de particules du composant catalytique de métal noble (A) est de 2 à 50 nm.

3. La composition catalytique de purification de gaz d'échappement pour automobile selon la revendication 2, **caractérisée en ce qu'**une distance entre les particules adjacentes du composant catalytique métallique noble (A) est de 5 à 300 nm.

4. La composition catalytique de purification de gaz d'échappement pour automobile selon l'une quelconque des revendications 1 à 3, **caractérisée en ce que**, dans le composant catalytique métallique noble (A), du platine (Pt) et du platine-palladium (Pt-Pd) sont séparément supportés à l'avance par un oxyde inorganique résistant à la chaleur (B).

5. La composition catalytique de purification de gaz d'échappement pour automobile selon la revendication 1, **caractérisée en ce que** l'oxyde inorganique résistant à la chaleur (B) est γ-Al₂O₃ ou du γ-Al₂O₃ avec ajout de lanthane.

6. Un catalyseur de purification de gaz d'échappement pour automobile, **caractérisé en ce que** la composition catalytique selon l'une quelconque des revendications 1 à 5 est revêtue d'un support de type structure monolithique ayant une forme en nid d'abeilles, et la quantité totale de revêtement de ladite composition catalytique par unité de volume du support de type structure monolithique est de 30 à 400 g/L.

7. Le catalyseur de purification de gaz d'échappement pour automobile selon la revendication 6, **caractérisé en ce que** des poids de platine (Pt) qui sont dans un état de substance élémentaire dans la composition catalytique et du platine - palladium (Pt-Pd) qui est dans un état d'alliage dans la composition catalytique par unité de volume du support de type structure monolithique sont chacun de 0,1 à 10 g/L.

8. Un système catalytique de purification de gaz d'échappement, dans lequel des moyens de pulvérisation d'une huile légère et le catalyseur de purification de gaz d'échappement (DOC) pour automobile selon la revendication 6 ou 7 sont placés dans une voie d'écoulement de gaz d'échappement de l'automobile échappé des moteurs diesel, et un filtre (DPF) pour collecter des composantes de particules nocives est placé dans l'étape ultérieure à celle-ci.

9. Un système catalytique pour la purification de gaz d'échappement, dans lequel des moyens de pulvérisation d'une huile légère et le catalyseur de purification de gaz d'échappement (DOC) pour automobile selon la revendication 6 ou 7 sont placés dans une voie d'écoulement de gaz d'échappement d'automobile échappé des moteurs diesel, et un filtre (DPF) pour collecter des composantes de particules nocives et un catalyseur (LNT) pour collecter des oxydes d'azote et réduire et purifier avec un hydrocarbure sont placés successivement dans l'étape ultérieure à celle-ci.

10. Un système catalytique pour la purification de gaz d'échappement, dans lequel des moyens de pulvérisation d'une huile légère et le catalyseur de purification de gaz d'échappement (DOC) pour automobile selon la revendication 6 ou 7 sont placés dans une voie d'écoulement de gaz d'échappement d'automobile échappé des moteurs diesel, et un filtre (DPF) pour collecter des composantes de particules nocives, des moyens de pulvérisation de composantes d'ammoniac, et un catalyseur de réduction catalytique sélective (SCR) afin de réduire et de purifier les oxydes d'azote en utilisant la composante d'ammoniac comme un agent réducteur sont placés dans l'étape ultérieure à celle-ci.

11. Un processus de purification de gaz d'échappement, **caractérisé par** l'utilisation du système catalytique pour la purification de gaz d'échappement selon la revendication 8; fournissant une composante d'huile légère dans l'étape précédente du catalyseur de purification de gaz d'échappement (DOC) pour automobile dans une voie d'écoulement de gaz d'échappement d'automobile échappé des moteurs diesel et en la mettant en contact avec le dit catalyseur pour chauffer le gaz d'échappement ainsi que pour convertir du NO dans le gaz d'échappement en NO₂ par oxydation; et recueillant des composantes de particules nocives avec un filtre (DPF) dans l'étape ultérieure à celle-ci ainsi qu'en faisant la combustion des composantes de particules nocives utilisant ledit gaz d'échappement chauffé.

12. Un processus de purification de gaz d'échappement, **caractérisé par** l'utilisation du système catalytique pour la purification de gaz d'échappement selon la revendication 9 ; fournissant une composante d'huile légère dans l'étape précédente du catalyseur de purification de gaz d'échappement (DOC) pour automobile dans une voie d'écoulement de gaz d'échappement d'automobile échappé des moteurs diesel et en la mettant en contact avec le dit catalyseur pour chauffer le gaz d'échappement ainsi que pour convertir du NO dans le gaz d'échappement en NO₂ par oxydation ; et recueillant des composantes de particules nocives avec un filtre (DPF) dans l'étape ultérieure à celle-ci ainsi qu'en faisant la combustion des composantes de particules nocives utilisant ledit gaz d'échappement chauffé ; mettant ensuite en contact l'hydrocarbure restant et le NO₂ avec un catalyseur (LNT) pour réduire et purifier des oxydes d'azote dans le gaz d'échappement.

13. Un processus de purification de gaz d'échappement, **caractérisé par** l'utilisation du système catalytique pour la purification de gaz d'échappement selon la revendication 10; fournissant une composante d'huile légère dans l'étape précédente du catalyseur de purification de gaz d'échappement (DOC) pour automobile dans une voie d'écoulement de gaz d'échappement d'automobile échappé des moteurs diesel et en la mettant en contact avec le dit catalyseur pour chauffer le gaz d'échappement ainsi que pour convertir du NO dans le gaz d'échappement en NO₂ par oxydation ; et recueillant des composantes de particules nocives avec un filtre (DPF) dans l'étape ultérieure à celle-ci ainsi qu'en faisant la combustion des composantes de particules nocives utilisant ledit gaz d'échappement chauffé ; pulvérisant ensuite des composantes d'ammoniac à partir de moyens de pulvérisation de composantes d'ammoniac, puis mettant en contact des oxydes d'azote dans le gaz d'échappement avec un catalyseur de réduction catalytique sélective (SCR) afin de réduire et de purifier avec de l'ammoniac.

14. Un processus de purification de gaz d'échappement, **caractérisé par** l'utilisation du système catalytique pour la purification de gaz d'échappement selon la revendication 10 ; fournissant une composante d'huile légère dans l'étape précédente du catalyseur de purification de gaz d'échappement (DOC) pour automobile dans une voie d'écoulement de gaz d'échappement d'automobile échappé des moteurs diesel et en la mettant en contact avec le dit catalyseur pour chauffer le gaz d'échappement ainsi que pour convertir du NO dans le gaz d'échappement en NO₂ par oxydation ; pulvérisant des composantes d'ammoniac à partir de moyens de pulvérisation de composantes d'ammoniac, puis mettant en contact des oxydes d'azote dans le gaz d'échappement avec un catalyseur de réduction catalytique sélective (SCR) afin de réduire et de purifier avec de l'ammoniac ; recueillant des composantes de particules nocives avec un filtre (DPF) dans l'étape ultérieure à celle-ci ainsi que la combustion des composantes de particules nocives utilisant ledit gaz d'échappement chauffé.
